# EUROPÄISCHE PATENTANMELDUNG

(11) **EP 1 428 736 A1**
(43) Veröffentlichungstag der Anmeldung: **16.06.2004**
(21) Anmeldenummer: 03028394.9
(22) Anmeldetag: 11.12.2003
(51) Int. Cl.: B60S 1/52, B05B 1/10

(54) **Scheibenwaschvorrichtung für Fahrzeuge**

(30) Priorität: 13.12.2002 DE 10258288
(71) Anmelder: Hella KG Hueck & Co., 59552 Lippstadt (DE)
(72) Erfinder: Chudaska, Andreas, Dr., 59597 Erwitte (DE); Thiele, Klaus, 59558 Lippstadt (DE)

(57) **Zusammenfassung**

Die Erfindung eine Scheibenwaschvorrichtung für Fahrzeuge, insbesondere für Fahrzeugscheinwerfer, mit einem zylindrischen Gehäuse (21), mit einem mittels einer druckausübenden Reinigungsflüssigkeit teleskopartig von einer Ausgangsstellung innerhalb des Gehäuses (21) in eine axial aus dem Gehäuse (21) heraus stehenden Arbeitsstellung verschiebbaren Düsenträger (2), wobei dem Düsenträger auf einer dem Gehäuse abgewandten Seite eine Düse (8) und auf einer dem Gehäuse (21) zugewandte Seite ein Kolben (9) zugeordnet ist, das am Außenrand des Kolbens (9) in Umfangsrichtung eine mit einem an die Innenwand die Gehäuses (21) anliegenden Dichtelement (19) ausgestattete Dichteinrichtung (10) angeordnet ist zur Abdichtung eines in Strömungsrichtung hinteren Hohlraumabschnitts (11) des Gehäuses von einem in Strömungsrichtung vorderen Hohlraumabschnitts (12) des Gehäuses (21), wobei auf einer in Strömungsrichtung der Reinigungsflüssigkeit vorderen Seite des Dichtelementes (10) ein weiteres Dichtelement (20) angeordnet ist.

## Beschreibung

Die Erfindung betrifft eine Scheibenwaschvorrichtung für Fahrzeuge, insbesondere für Fahrzeugscheinwerfer, mit einem zylindrischen Gehäuse, mit einem mittels einer druckausübenden Reinigungsflüssigkeit teleskopartig von einer Ausgangsstellung innerhalb des Gehäuses in eine axial aus dem Gehäuse heraus stehenden Arbeitsstellung verschiebbaren Düsenträger, wobei dem Düsenträger auf einer dem Gehäuse abgewandten Seite eine Düse und auf einer dem Gehäuse zugewandte Seite ein Kolben zugeordnet ist und am Außenrand des Kolbens in Umfangsrichtung eine mit einem an die Innenwand die Gehäuses anliegenden Dichtelement ausgestattete Dichteinrichtung angeordnet ist zur Abdichtung eines in Strömungsrichtung hinteren Hohlraumabschnitts des Gehäuses von einem in Strömungsrichtung vorderen Hohlraumabschnitts des Gehäuses.

Scheibenwaschvorrichtungen für Fahrzeuge, wie sie aus der DE 40 11 128 C2 oder EP 0 760 318 A1 bekannt sind, weisen üblicherweise ein zylindrisches Gehäuse auf, in dem ein Düsenträger mit einer an einem freien Ende desselben angeordneten Düse teleskopartig verschiebbar angeordnet ist. Der Düsenträger weist einen Kolben auf, der einen die Einlassöffnung aufweisenden hinteren Hohlraum des zylindrischen Gehäuses von einem der Düse zugewandten vorderen Hohlraumabschnitt des Gehäuses trennt. In einer Ausgangsstellung des Düsenträgers bzw. des Kolbens weist der hintere Hohlraumabschnitt des Gehäuses ein kleineres Volumen auf als der vordere Hohlraumabschnitt desselben. In Folge der Druckbeaufschlagung einer durch die Einlassöffnung in dem hinteren Hohlraumabschnitt des Gehäuses vorhandenen Reinigungsflüssigkeit wird der Düsenträger von der Ausgangsstellung in eine die Düse aus dem Gehäuse hervorspringende Lage einnehmende Arbeitsstellung verbracht, in der der vordere Hohlraum ein kleineres Volumen hat als der hintere Hohlraum des zylindrischen Gehäuses. Zur Abdichtung des hinteren Hohlraumabschnittes von dem vorderen Hohlraumabschnitt ist es bekannt, dass dem Kolben eine Dichteinrichtung zugeordnet ist, die aus einem radial abragenden umlaufenden Dichtelement (Dichtung) besteht.

Aufgrund der Geometrie der Dichtung erhöht sich zwar die radiale Anpresskraft, die auf die Innenwand des Gehäuses wirkt, so dass eine zufriedenstellende Abdichtung ermöglicht wird. Nachteilig an dem bekannten Dichtelement ist jedoch, dass die Dichtung ungeschützt ist gegenüber aus der Umgebung eindringenden Schmutzpartikeln, die zu einer Beschädigung der Dichtkante führen können. Dies kann zu unerwünschten Undichtigkeitserscheinungen führen, was insbesondere bei einer solchen Dichtelementgeometrie gegeben ist, bei der das Dichtelement in Strömungsrichtung der Reinigungsflüssigkeit flügelartig nach hinten abgewinkelt ist.

Aufgabe der vorliegenden Erfindung ist es, eine Scheibenwaschvorrichtung für Fahrzeuge derart weiterzubilden, dass auf einfache Weise eine langzeitstabile Dichtwirkung erzielt wird.

Zur Lösung dieser Aufgabe ist die Erfindung in Verbindung mit dem Oberbegriff des Patentanspruchs 1 dadurch gekennzeichnet, dass auf einer in Strömungsrichtung der Reinigungsflüssigkeit vorderen Seite des Dichtelementes ein weiteres Dichtelement angeordnet ist.

Der besondere Vorteil der Erfindung besteht darin, dass durch das Vorsehen eines zusätzlichen zweiten Dichtelementes, das in Strömungsrichtung der Reinigungsflüssigkeit vor einem ersten Dichtelement angeordnet ist, eine verbesserte Dichtwirkung erzielt wird. Das zweite Dichtelement kann die gleiche Dichtwirkung aufweisen wie das erste Dichtelement. Auf jeden Fall bewirkt das zweite Dichtelement einen Schutz des ersten Dichtelementes vor eindringenden Schmutzpartikeln, die zu einer Beschädigung des ersten Dichtelementes führen könnten. Vorteilhaft ermöglicht somit das zweite Dichtelement eine hohe und langzeitstabile Dichtwirkung.

Nach einer bevorzugten Ausführungsform der Erfindung ist das zweite Dichtelement als eine schmutzabstreifende Dichtlippe ausgebildet, die lediglich dazu dient, Schmutzpartikel von dem ersten Dichtelement abzuhalten. Die schmutzabstreifende Dichtlippe hat gegenüber dem ersten Dichtelement somit einen geringeren Dichtigkeitsgrad. Durch das mittels der schmutzabstreifenden Dichtlippe bewirkten Fernhalten der Schmutzpartikel von dem ersten Dichtelement kann eine Beschädigung der Dichtkante des ersten Dichtelementes sicher verhindert werden. Die Dichtwirkung des ersten Dichtelementes wird somit nicht beeinträchtigt.

Nach einer Weiterbildung der Erfindung erstreckt sich die schmutzabstreifende Dichtlippe radial von dem Kolben nach außen in Strömungsrichtung geneigt, während das erste Dichtelement sich radial von dem Kolben entgegen der Strömungsrichtung geneigt erstreckt. Dadurch, dass die schmutzabstreifende Dichtlippe bei der Bewegung in Strömungsrichtung nach Art eines Spachtels an der Innenwand des zylindrischen Gehäuses entlanggleitet, können die Schmutzpartikel leicht abgestreift werden. Eine abrasive Zerstörung des ersten Dichtelementes durch eingedrungenen Schmutz kann somit sicher vermieden werden.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: einen schematischen Längsschnitt durch eine erfindungsgemäße Scheibenwaschvorrichtung,
- Figur 2: einen schematischen Teilquerschnitt der Scheibenwaschvorrichtung gemäß Figur 1 im Bereich des Kolbens und
- Figur 3: eine vergrößerte Darstellung einer Einzelheit X in Figur 2, die eine Dichteinrichtung im Querschnitt darstellt.

Eine Scheibenwaschvorrichtung für Kraftfahrzeuge besteht im wesentlichen aus einem zylindrischen Gehäuse 1 und einem teleskopartig in dem zylindrischen Gehäuse 1 verschiebbaren Düsenträger 2.

Das zylindrische Gehäuse 1 ist als Hohlzylinder ausgebildet, mit einer stirnseitigen Einlassöffnung 3 zum Einströmen einer Reinigungsflüssigkeit 4. Auf einer in Strömungsrichtung 5 der Reinigungsflüssigkeit 4 vorne liegenden Stirnseite des zylindrischen Gehäuses 1 ist eine Bohrung 6 vorgesehen, in der der Düsenträger 2 gleitend gelagert ist.

Der Düsenträger 2 besteht im wesentlichen aus einer hohlzylinderförmigen Kolbenstange 7, durch die die Reinigungsflüssigkeit 4 zu einer vorne liegenden Düse 8 geleitet wird. Auf einer der Düse 8 abgewandten Seite der Kolbenstange 7 ist ein Kolben 9 angeordnet, dessen Durchmesser im wesentlichen dem Innendurchmesser des zylindrischen Gehäuse 1 entspricht. Dem Kolben 9 ist eine Dichteinrichtung 10 zugeordnet, die ein Abdichten des in Strömungsrichtung 5 hinter dem Kolben 9 angeordneten hinteren Hohlraumabschnitts 11 des Gehäuses 1 von einem in Strömungsrichtung 5 vor dem Kolben 9 liegenden vorderen Hohlraumabschnitt 12 des Gehäuses 1 bewirkt.

Das Verbringen des Düsenträgers 2 bzw. der Düse 8 aus einer Ausgangsstellung (Ruhestellung) in eine aus dem zylindrischen Gehäuse 1 abragenden Arbeitsstellung erfolgt durch Beaufschlagung der unter Druck stehenden Reinigungsflüssigkeit 4 in dem hinteren Hohlraumabschnitt 11. Hierdurch wird der Kolben 9 entgegen einer auf den Kolben 9 durch eine vorgespannte Feder 13 wirkenden Federkraft entsprechend einer Verschiebekraft 14 in die Arbeitsstellung bewegt, in der der Kolben 9 an einem Anschlag 15 des Gehäuses 1 anliegt. Zur Zurückbewegung des Düsenträgers 2 von der Arbeitsstellung in die Ausgangsstellung wird die Druckbeaufschlagung der Reinigungsflüssigkeit 4 zurückgenommen, so dass mittels der Feder 13 der Kolben 9 in eine Ausgangsstellung zurückbewegt wird, in der der Kolben 9 an der mit der Einlassöffnung 3 versehenen Stirnseite des zylindrischen Gehäuses 1 anliegt.

Die erfindungsgemäße Dichteinrichtung 10 weist zum einen ein erstes Dichtelement 16 und zum zweiten ein zweites Dichtelement 17 auf, die einstückig miteinander verbunden sind und mit einem gemeinsamen Basisabschnitt 18 radial von dem Kolben 9 nach außen abragen. Die beiden Dichtelemente 16 und 17 teilen sich in radialer Richtung gabel- oder Y-förmig auf, wobei ein Endabschnitt 19 ersten Dichtelementes 16 entgegen der Strömungsrichtung 5 geneigt und ein Endabschnitt 20 des zweiten Dichtelementes 17 in Strömungsrichtung 5 geneigt unter jeweils Anlage einer Dichtkante an einer Innenwand 21 des zylindrischen Gehäuses verläuft.

Im vorliegenden Ausführungsbeispiel ist das zweite Dichtelement 17 als schmutzabstreifende Dichtlippe ausgebildet, die eine geringere Dicke aufweist als das erste Dichtelement 16. Das erste Dichtelement 16 wirkt als eigentliche Dichtung, während die schmutzabweisende Dichtlippe 17 lediglich derart ausgebildet ist, dass sie auf der Innenwand 21 abgelagerte Schmutzpartikel abstreifen kann. Auf diese Weise bildet die schmutzabstreifende Dichtlippe 17 eine Hilfslippe für das erste Dichtelement 16.

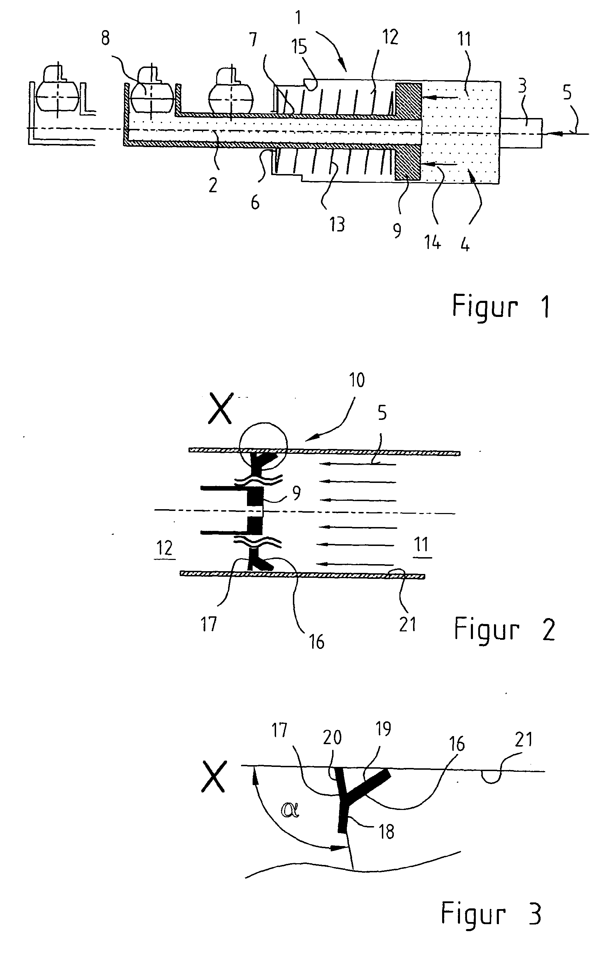

Um das Eindringen von Schmutzpartikeln in den Bereich der Dichtkante des ersten Dichtelementes 16 und der Innenwand 21 zu verhindern, erstreckt sich der Endabschnitt 20 der Dichtlippe 17 in einem stumpfen Winkel α zu der Innenwand 21, so dass die auf der Innenwand 21 abgelagerten Schmutzpartikel nach Art eines Spachtels abgelöst und nach Innen verlagert werden. Wie aus Figur 3 zu ersehen ist, beträgt der stumpfe Winkel α, der auf einer in Strömungsrichtung 5 liegende Seite des Endabschnitts 20 angeordnet ist und sich zwischen der Innenwand 21 und dem Endabschnitt 20 erstreckt, etwa 100°. Die gabelförmig auseinanderlaufenden Endabschnitte 19 und 20 bilden einen Winkel von 60°. Bessere Schmutzabstreifergebnisse erzielen sich bei einem Winkel von mehr als 90° zwischen den Endabschnitten 19 und 20.

Das erste Dichtelement 16 und das zweite Dichtelement 17 erstrecken sich ringförmig in Umfangsrichtung des Kolbens 9 und sind in einer nicht dargestellten Ringnut in dem Außenrand des Kolbens 9 gelagert. Nach einer nicht dargestellten alternativen Ausführungsform kann das zweite Dichtelement 17 auch als gesondertes Bauteil in einem axialen Abstand zu dem ersten Dichtelement 16 auf einem Außenrand des Kolbens 9 formschlüssig gelagert sein. Wesentlich ist, dass das zweite Dichtelement 17 in Strömungsrichtung 5 vor dem ersten Dichtelement 16 angeordnet ist.

Nach einer weiteren alternativen Ausführungsform kann das zweite Dichtelement 17 auch an einer der Düse 8 zugewandten Stirnseite des Kolbens 9 angebracht sein. Wesentlich ist, dass der Endabschnitt 20 des zweiten Dichtelementes 17 derart auf die Innenwand 21 drückt, dass Schmutzpartikel von der Innenwand 21 abgelöst werden und nicht in den Bereich des ersten Dichtelementes 16 gelangen können.

Das erste und zweite Dichtelement 16 und 17 können flexibel aber formstabil ausgebildet sein. Nach einer alternativen Ausführungsform kann das zweite Dichtelement 17 auch flexibel ausgebildet sein, wobei es unter Vorspannung stehend auf die Innenwand 21 drückt.

## Patentansprüche

1. Scheibenwaschvorrichtung für Fahrzeuge, insbesondere für Fahrzeugscheinwerfer, mit einem zylindrischen Gehäuse, mit einem mittels einer druckausübenden Reinigungsflüssigkeit teleskopartig von einer Ausgangsstellung innerhalb des Gehäuses in eine axial aus dem Gehäuse heraus stehenden Arbeitsstellung verschiebbaren Düsenträger, wobei dem Düsenträger auf einer dem Gehäuse abgewandten Seite eine Düse und auf einer dem Gehäuse zugewandte Seite ein Kolben zugeordnet ist und am Außenrand des Kolbens in Umfangsrichtung eine mit einem an die Innenwand die Gehäuses anliegenden Dichtelement ausgestattete Dichteinrichtung angeordnet ist zur Abdichtung eines in Strömungsrichtung hinteren Hohlraumabschnitts des Gehäuses von einem in Strömungsrichtung vorderen Hohlraumabschnitts des Gehäuses, **dadurch gekennzeichnet, dass** auf einer in Strömungsrichtung (5) der Reinigungsflüssigkeit vorderen Seite des Dichtelementes (16) ein weiteres Dichtelement (17) angeordnet ist.

2. Scheibenwaschvorrichtung nach Anspruch 1, **dadurch gekennzeichnet, dass** das zweite Dichtelement (17) als eine schmutzabstreifende Dichtlippe ausgebildet ist.

3. Scheibenwaschvorrichtung nach Anspruch 1 oder 2, **dadurch gekennzeichnet, dass** die schmutzabstreifende Dichtlippe (17) zumindest beim Verfahren des Düsenträgers (2) in die Arbeitsstellung in Strömungsrichtung (5) der Reinigungsflüssigkeit hin orientiert ausgebildet ist.

4. Scheibenwaschvorrichtung nach einem der Ansprüche 1 bis 3, **dadurch gekennzeichnet, dass** die schmutzabstreifende Dichtlippe (17) derart geformt ist, dass sie und/oder ein freies Ende (Endabschnitt 20) derselben bei Bewegung des Kolbens (9) von der Ausgangsstellung in die Arbeitsstellung einen stumpfen Winkel (α) mit der Innenwand (21) des Gehäuses (1) bildet.

5. Scheibenwaschvorrichtung nach einem der Ansprüche 1 bis 4, **dadurch gekennzeichnet, dass** das erste Dichtelement (16) zumindest beim Verfahren des Düsenträgers (2) in die Arbeitsstellung entgegen der Strömungsrichtung (5) der Reinigungsflüssigkeit orientiert ausgebildet ist.

6. Scheibenwaschvorrichtung nach einem der Ansprüche 1 bis 5, **dadurch gekennzeichnet, dass** das erste Dichtelement (16) und die schmutzabstreifende Dichtlippe (17) radial in einem Winkel von größer 60° zueinander von den Kolben (9) abragen.

7. Scheibenwaschvorrichtung nach einem der Ansprüche 1 bis 6, **dadurch gekennzeichnet, dass** das erste Dichtelement (16) und/oder das zweite Dichtelement (17) flexibel ausgebildet ist.

8. Scheibenwaschvorrichtung nach einem der Ansprüche 1 bis 7, **dadurch gekennzeichnet, dass** zweite Dichtelement (17) einstückig mit dem ersten Dichtelement (16) verbunden ist.

9. Scheibenwaschvorrichtung nach einem der Ansprüche 1 bis 7, **dadurch gekennzeichnet, dass** das zweite Dichtelement (17) als gesondertes Bauteil zu dem ersten Dichtelement (16) von dem Kolben (9) radial abragt.

10. Scheibenwaschvorrichtung nach einem der Ansprüche 1 bis 9, **dadurch gekennzeichnet, dass** der Kolben (9) als Hohlkolben mit einer Einlassöffnung ausgebildet ist und dass eine Druckfeder (13) an dem Kolben (9) mit einer solchen Rückstellkraft angreift, derart, dass bei Nichtdruckbeaufschlagung der Reinigungsflüssigkeit (4) der Kolben (9) in die Ausgangsstellung zurückbewegt wird.
